# FASCICULE DE BREVET EUROPEEN

(11) **EP 2 931 506 B1**
(45) Date de publication et mention de la délivrance du brevet: **11.01.2017**
(21) Numéro de dépôt: 13801664.7
(22) Date de dépôt: 14.11.2013
(51) Int. Cl.: D07B 3/00, D07B 7/02

(54) **PROCEDE DE FABRICATION D'UNE CONDUITE SOUS-MARINE ET DISPOSITIF POUR SA MISE EN OEUVRE**
VERFAHREN ZUR HERSTELLUNG EINES UNTERWASSERROHRS UND VORRICHTUNG ZUR DURCHFÜHRUNG DES VERFAHRENS
METHOD FOR PRODUCING AN UNDERWATER PIPE AND DEVICE FOR IMPLEMENTING SAME

(30) Priorité: 11.12.2012 FR 1261898
(43) Date de publication de la demande: 21.10.2015
(73) Titulaire: Technip France, 92400 Courbevoie (FR)
(72) Inventeur: MELOT, Mickaël, F-27310 Bouquetot (FR)
(74) Mandataire: Gendron, Vincent Christian
(86) Numéro de dépôt international: PCT/FR2013/052743
(87) Numéro de publication internationale: WO 2014/091100

(56) Documents cités:
- US-A- 5 918 641
- US-A1- 2011 214 773

## Description

La présente invention concerne le domaine de la fabrication des conduites, destinées notamment à l'industrie pétrolière offshore et, en particulier, concerne un procédé de fabrication d'une conduite du type comprenant une étape d'assemblage d'une structure d'éléments périphériques enroulés suivant une configuration en S-Z autour d'un noyau central flexible entraîné en déplacement selon son axe longitudinal. De telles conduites sont connues de US 5 918 641 ou US 2011/214773.

Les éléments assemblés autour du noyau central flexible suivant la configuration en S-Z peuvent être de divers types, en fonction du type de conduite visée : câbles électriques, tuyaux hydrauliques, joncs d'isolation thermique, tubes en acier, fibres optiques, etc.

Le mode d'assemblage en S-Z de tels éléments périphériques autour du noyau central flexible de la conduite est bien connu et consiste à inverser périodiquement le sens de pose des éléments périphériques autour du noyau central. Ce mode d'assemblage associe ainsi un enroulement en hélice dans un premier sens à un enroulement de sens contraire, par opposition à un assemblage classique suivant un mode d'assemblage hélicoïdal, où les éléments sont disposés en hélice à un seul sens autour du noyau central.

La pose d'éléments périphériques en configuration S-Z permet d'avoir le meilleur compromis entre résistance mécanique aux efforts de traction/compression, résistance à la fatigue, coût de fabrication et encombrement du dispositif d'assemblage, comparativement à un assemblage d'éléments périphériques enroulés hélicoïdalement. Cependant, la mise en oeuvre d'un tel assemblage est relativement complexe et nécessite d'être vigilant en regard du bon positionnement des éléments périphériques ainsi assemblés. En effet, si la pose en S-Z des éléments périphériques est mal réalisée, cela peut entraîner des dommages mécaniques au sein de la structure de la conduite. En particulier, lorsque la conduite est soumise à des efforts de traction et/ou compression lors de son utilisation en service, les éléments périphériques peuvent flamber et ainsi conduire à une perte d'intégrité physique de la conduite.

A cet égard, le point d'inversion, qui définit la position où s'opère le changement de sens de la rotation des éléments périphériques, constitue une zone particulièrement critique et sensible lors de l'assemblage des éléments périphériques.

Egalement, l'assemblage d'éléments périphériques autour du noyau selon la configuration S-Z est immédiatement suivie par la pose de rubans adhésifs de maintien, qui bloquent l'assemblage afin d'éviter tout détoronage des éléments périphériques à l'inversion de sens. Or, le pouvoir adhésif des rubans de maintien peut se trouver être affecté par la température régnant dans le lieu de fabrication de la conduite, en particulier à basses températures de l'ordre de quelques degrés Celsius ou, à l'inverse dans des plages de températures élevées, aux environs de 35°C, avec comme conséquence fâcheuse de ne pas pouvoir maintenir les éléments périphériques posés en S-Z dans la position adéquate.

Etant donné les contraintes exposées ci-dessus liées à l'assemblage en S-Z, qui sont susceptibles de causer des problèmes d'intégrité physique pour les conduites concernées, il est donc conseillé de contrôler lors de la fabrication de la conduite et de manière plus spécifique, juste après l'étape d'assemblage des éléments périphériques en S-Z, le bon positionnement de ces éléments.

Jusqu'alors, le contrôle en fabrication est réalisé manuellement par un opérateur. Parmi les différents types de contrôle manuel effectué lors de l'assemblage de structure d'éléments périphériques en S-Z, il est par exemple connu de faire contrôler visuellement par un opérateur la valeur de l'angle d'hélice, c'est-à-dire l'angle que fait l'élément contrôlé avec la génératrice de la conduite. L'opérateur utilise pour ce faire un instrument de calibration se présentant sous la forme d'un support en matière transparente sur lequel est délimitée une plage de tolérance de l'angle d'hélice, correspondant aux valeurs acceptables de l'angle par rapport à un axe horizontal tracé sur le support et destiné à être superposé à la génératrice tracée sur le noyau flexible. Une fois l'axe horizontal du support superposé à la génératrice, l'opérateur vérifie alors que l'angle d'hélice des éléments contrôlés est compris dans la plage de tolérance, la mesure à l'aide de l'instrument de calibration étant effectuée à mi-longueur du pas d'hélice. Cette méthode de contrôle n'est toutefois pas satisfaisante, dans la mesure où le diagnostic qui en découle dépend fortement de l'acuité visuelle des opérateurs et de leur aptitude à pouvoir maintenir une concentration élevée dans la durée, ainsi que de la qualité des instruments de mesure mis à leur disposition. Aussi, en fonction de ces conditions, des erreurs peuvent survenir lors des différents relevés, faire échouer la fabrication de la conduite et partant, conduire à la fabrication d'une nouvelle conduite. De plus, il est également nécessaire d'arrêter régulièrement la ligne de fabrication afin que l'opérateur puisse vérifier que les données relevées sont bien cohérentes avec la fabrication de la conduite en cours. Cette méthode de contrôle est donc peu fiable et est à la fois fastidieuse et coûteuse à mettre en place.

Dans ce contexte, la présente invention a pour but de proposer un procédé de fabrication d'une conduite tubulaire sous-marine du type précité exempt des limitations précédemment évoquées et, en particulier, qui permette d'améliorer la fiabilité de contrôle, lors de la fabrication de la conduite, du bon positionnement des éléments périphériques assemblés selon une configuration en S-Z, afin de garantir l'intégrité de la conduite.

L'invention atteint son but en proposant un procédé de fabrication d'une conduite tubulaire notamment destinée au transport d'hydrocarbures provenant de puits sous-marin, comprenant une étape d'assemblage d'une structure d'éléments périphériques métalliques, dans laquelle lesdits éléments périphériques sont enroulés suivant une configuration en S-Z autour d'un noyau central flexible entraîné en déplacement selon son axe longitudinal, caractérisé en ce qu'il comprend des étapes dans lesquelles :
- on fournit au moins un capteur inductif agencé en rotation autour dudit noyau central flexible de façon synchronisée avec le déplacement longitudinal dudit noyau central flexible, de manière que ledit au moins un capteur balaye la périphérie dudit noyau central flexible en regard et à proximité immédiate desdits éléments périphériques enroulés autour dudit noyau central flexible, lors de l'étape d'assemblage ;
- on acquiert à l'aide dudit au moins un capteur, des signaux de mesure dont l'amplitude varie selon que ledit au moins un capteur se trouve ou non en regard d'un élément périphérique enroulé autour dudit noyau au cours de la rotation dudit au moins un capteur autour dudit noyau central flexible ;
- on contrôle le positionnement desdits éléments périphériques assemblés à partir desdits signaux de mesure acquis.

Des aspects préférés mais non limitatifs du procédé de la présente invention sont les suivants :
- ladite étape d'assemblage est suivie d'une étape de pose d'une bande adhésive de maintien autour desdits éléments périphériques assemblés autour dudit noyau central flexible, ladite étape de pose de ladite bande adhésive étant effectuée à l'aide d'une rubaneuse sur laquelle ledit au moins un capteur est embarqué ;
- on acquiert des données de positions angulaires représentatives du mouvement de rotation dudit au moins un capteur inductif autour dudit noyau central flexible et des données de positions linéaires représentatives du déplacement longitudinal dudit noyau central flexible lors de l'étape d'assemblage, et on traite lesdits signaux de mesure acquis, en combinant lesdites données de positions angulaires avec lesdites données de positions linéaires acquises, de manière à établir une représentation des profils de pose respectifs desdits éléments périphériques le long dudit noyau central flexible, lesdits profils de pose étant utilisés pour contrôler le positionnement desdits éléments périphériques assemblés ;
- on détermine des paramètres de contrôle de l'enroulement suivant la configuration S-Z pour un élément périphérique contrôlé à partir du profil de pose établi pour ledit élément périphérique contrôlé et on surveille l'évolution desdits paramètres de contrôle au cours de ladite étape d'assemblage en comparant lesdits paramètres de contrôle à des seuils de tolérance respectifs prédéterminés ;
- lesdits paramètres de contrôle comprennent le pas et/ou l'angle de recouvrement et/ou l'angle d'hélice de l'enroulement suivant la configuration S-Z pour ledit élément périphérique contrôlé ;
- on met en oeuvre une étape de déclenchement d'une alarme visuelle et/ou sonore lorsque l'un au moins desdits paramètres de contrôle est en défaut par rapport auxdits seuils de tolérance et une étape de signalisation dudit au moins un paramètre de contrôle en défaut ;
- on rafraîchit lesdits paramètres de contrôle à chaque tour dudit au moins un capteur inductif autour dudit noyau central flexible ;
- on fournit une pluralité de capteurs inductifs disposés circonférentiellement audit noyau central flexible ;
- on fournit une pluralité de capteurs inductifs disposés longitudinalement audit noyau central flexible.

L'invention concerne encore un dispositif pour la mise en oeuvre du procédé selon l'invention, du type comprenant des moyens de déplacement d'un noyau central flexible selon son axe longitudinal depuis une bobine émettrice vers un poste d'assemblage, des moyens d'enroulement d'éléments périphériques métalliques suivant une configuration en S-Z autour dudit noyau central flexible au niveau dudit poste d'assemblage, ledit dispositif étant caractérisé en ce qu'il comprend une unité d'acquisition comprenant au moins un capteur inductif apte à être entraîné en rotation autour dudit noyau central flexible de façon synchronisée avec le déplacement longitudinal dudit noyau central flexible, de manière que ledit au moins un capteur balaye la périphérie dudit noyau central flexible en regard et à proximité immédiate desdits éléments périphériques assemblés avec ledit noyau central flexible, et une unité de traitement couplée à ladite unité d'acquisition, adaptée pour contrôler le positionnement desdits éléments périphériques autour dudit noyau central flexible à partir de signaux de mesure acquis par ledit au moins un capteur inductif.

Des aspects préférés mais non limitatifs du dispositif de la présente invention sont les suivants :
- ledit au moins un capteur inductif est monté à l'extrémité d'un bras support articulé fixé au niveau d'un plateau support d'une rubaneuse disposée après ledit poste d'assemblage, ledit plateau support étant apte à être entraîné en rotation autour de la périphérie dudit noyau central flexible assemblé avec lesdits éléments périphériques, pour la pose d'un ruban adhésif de maintien autour desdits éléments périphériques ;
- ledit au moins un capteur est connecté à des moyens de conditionnement des signaux de mesure dont la sortie est connectée à une interface de communication sans fil permettant un transfert de données sans fil entre ladite unité d'acquisition et ladite unité de traitement ;
- ladite unité de traitement comprend une baie de contrôle comportant un pupitre de contrôle équipé d'un clavier de saisie et/ou de programmation, d'un afficheur et de moyens de signalisation et d'alarme.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 illustre schématiquement un dispositif d'assemblage S-Z pour la mise en oeuvre du procédé selon l'invention ;
- la Figure 2 illustre schématiquement en section un exemple de conduite avec une structure d'éléments périphériques assemblés autour du noyau central de la conduite suivant une configuration en S-Z ;
- la Figure 3 illustre la forme d'onde d'un signal de mesure du positionnement des différents éléments constitutifs de la structure illustrée à la figure 2 ;
- la figure 4 illustre une cartographie 2D de ladite structure établie conformément à la présente invention.

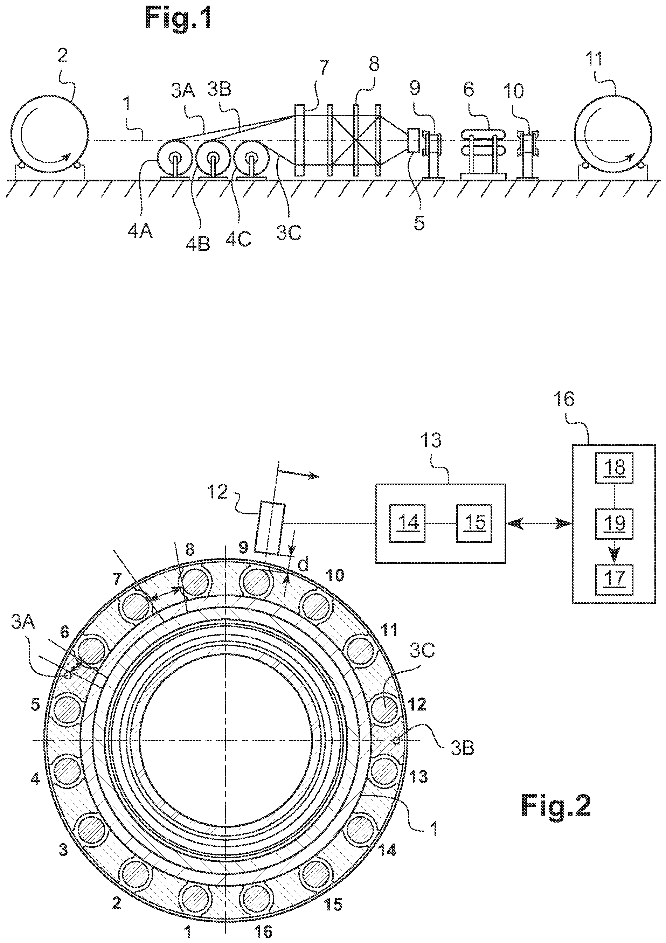

Le dispositif schématisé à la figure 1 représente une ligne de fabrication conçue pour assurer la fabrication de différents types de conduites pour l'exploitation d'hydrocarbures en très grande profondeur, en particulier, mais non exclusivement, pour assurer la fabrication de conduites de type IPB (pour « Integrated Production Bundle »). Typiquement, une conduite IPB comprend un noyau central de conduite flexible, dont la structure est bien connue en soi et définie par les documents normatifs API 17J ou API RP 17B émis par l' « American Petroleum Institute », autour duquel on vient superposer d'autres couches d'éléments périphériques selon une configuration en S-Z, comportant par exemple des tuyaux hydrauliques, des tubes inox, des câbles électriques et/ou optiques et des joncs de bourrage et/ou d'isolation thermique. Ce type de conduite permet ainsi de maintenir en température le noyau central afin d'éviter par exemple la formation de bouchon d'hydrate lorsque la ligne est en arrêt. Le drainage des gaz, ainsi que le suivi en température de la ligne par fibres optiques sont également rendus possibles.

Sur la figure 1, est donc représenté à titre d'exemple un noyau central flexible 1 d'axe longitudinal, stocké sur une bobine émettrice 2 et destiné à la fabrication d'une conduite de type IPB. Une structure d'éléments périphériques métalliques est destinée à être enroulée tout autour du noyau central flexible 1, suivant une configuration en S-Z, comportant par exemple des joncs de bourrage ou des tubes métalliques 3A, 3B pour la mise en place d'une ou plusieurs fibres optiques et des câbles électriques 3C à armature métallique. Ces éléments périphériques sont stockés sur des bobines telles que 4A, 4B, 4C. Les éléments périphériques 3A, 3B, 3C sont enroulés en S-Z autour du noyau central flexible 1, au niveau d'un poste d'assemblage 5, disposé sur le chemin de déplacement du noyau central flexible 1, en donnant une configuration géométrique souhaitée à l'assemblage des éléments périphériques autour du noyau.

Pour cet assemblage, le noyau central flexible 1 est entraîné axialement en déplacement depuis la bobine émettrice 2 vers le poste d'assemblage 5 par un organe commandé de traction 6, disposé en aval du poste d'assemblage 5 et conçu pour appliquer un mouvement de translation axiale (ou d'avance) au noyau central flexible 1. L'opération d'assemblage des éléments périphériques 3A, 3B, 3C sur le noyau central flexible 1 ainsi entraîné en déplacement selon son axe longitudinal vers le poste d'assemblage 5, consiste à enrouler les éléments périphériques 3A, 3B, 3C pour constituer une structure assemblée en S-Z, associant un enroulement en hélice dans un premier sens « S » à un enroulement de sens contraire « Z ». Pour ce faire, les éléments périphériques 3A, 3B, 3C sont guidés au travers d'un guide immobile 7 vers un dispositif d'inversion de sens 8 muni d'un plateau de pose tournant, disposé immédiatement en amont du poste d'assemblage 5 et par l'intermédiaire duquel les éléments périphériques sont tout d'abord animés d'un mouvement de rotation de sens « S » autour du noyau central flexible 1 puis, dans un deuxième temps, d'un mouvement de rotation de sens inversé « Z ». Le mouvement d'avance du noyau central flexible 1 généré par son déplacement longitudinal, combiné au mouvement de rotation dans un sens puis dans l'autre du plateau de pose 8 des éléments périphériques 3A, 3B, 3C, permet donc d'assurer un assemblage de ces éléments, de sorte qu'ils s'étendent autour du noyau central flexible 2 suivant un trajet évoluant longitudinalement en S-Z.

Cette étape d'assemblage de la structure d'éléments périphériques suivant une configuration en S-Z, réalisée au niveau du poste d'assemblage 5, est suivie de la pose d'une bande adhésive de maintien autour des éléments périphériques 3A, 3B, 3C assemblés autour du noyau central flexible 1, qui vient bloquer l'assemblage. Cette bande de maintien est posée par l'intermédiaire d'une première rubaneuse 9, disposée immédiatement après le poste d'assemblage 5 sur la ligne de fabrication et qui est entraînée en rotation de façon synchronisée avec l'organe commandé de traction 6 disposé en aval. Par exemple, chaque tour de rubaneuse correspond à une avance de 130 mm du noyau central flexible. Une deuxième rubaneuse 10 est disposée préférentiellement derrière l'organe commandé de traction 6, pour la pose d'une seconde bande de maintien autour de la structure d'éléments périphériques et est mêmement entraînée en rotation de façon synchronisée avec l'organe commandé de traction 6. Enfin, le noyau central flexible 1 assemblé avec les éléments périphériques en S-Z, est entraîné vers une bobine réceptrice 11.

Le procédé de l'invention vise alors à contrôler automatiquement et en temps réel pendant l'étape d'assemblage, le positionnement des éléments périphériques résultant de l'assemblage en S-Z de ces éléments autour du noyau central flexible 1. Comme illustré à la figure 2, ce contrôle de la structure en S-Z s'appuie sur un suivi des éléments périphériques 3A, 3B, 3C métalliques (câbles et tubes) à l'aide d'un capteur inductif 12, agencé en rotation autour de la structure d'éléments périphériques en S-Z, de manière à pouvoir balayer toute la structure en regard et à proximité immédiate des éléments périphériques enroulés autour du noyau central flexible 1. Le capteur inductif 12 est préférentiellement monté à l'extrémité d'un bras support articulé, lui-même fixé au niveau d'un plateau support tournant de la première rubaneuse 9 ou de la deuxième rubaneuse 10, afin de pouvoir contrôler l'ensemble de la structure en S-Z de la conduite. La rubaneuse (9 ; 10) étant motorisée en rotation de façon synchronisée avec l'organe commandé de traction 6, le capteur inductif 12 embarqué sur la rubaneuse (9 ;10) est ainsi entraîné en rotation autour de la structure de façon synchronisée avec le déplacement longitudinal du noyau central flexible 1. De la sorte, en combinant le mouvement d'avance du noyau central flexible 1 selon le déplacement longitudinal avec le mouvement de rotation du capteur inductif 12, couplé à la rotation de la rubaneuse (9 ;10), il est possible de construire une cartographie 2D de la structure et ainsi, établir une représentation développée plane du trajet des éléments périphériques le long du noyau central flexible 1.

Pour ce faire, le capteur 12 coopère avec une unité d'acquisition 13, elle-même embarquée sur la rubaneuse (9 ;10), comprenant des moyens de conditionnement 14 connectés au capteur 12, aptes à recevoir et à conditionner les signaux de mesure délivrés par le capteur 12, et une interface de communication sans fil 15, permettant un transfert de données sans fil entre l'unité d'acquisition embarquée 13 et une unité de traitement 16 déportée, prévue pour contrôler le positionnement des éléments périphériques autour du noyau central flexible à partir des signaux de mesures acquis par le capteur inductif 12. L'interface de communication sans fil 15 est par exemple constituée d'une interface radio permettant l'échange d'informations avec l'unité de traitement 16 dans un réseau sans fil local classique, par exemple de type Wifi, Zigbee ou Bluetooth.

Plus précisément, le capteur inductif 12 est sensible à la présence d'écrans métalliques se trouvant à proximité immédiate, susceptibles de perturber le champ magnétique émis par le capteur. Aussi, l'amplitude du signal détecté par le capteur 12 varie au cours de la rotation du capteur 12 couplé à la rubaneuse (9 ;10), selon qu'il se trouve en regard ou non d'un élément périphérique métallique de la structure en S-Z que l'on cherche à contrôler, par exemple un tube pour le passage d'une fibre optique ou un câble électrique. Pour que la détection des éléments périphériques de la structure en S-Z soit correctement effectuée, la distance d capteur-élément périphérique doit être la plus faible possible, tout en évitant de mettre le capteur au contact de la conduite. Elle varie en fonction du type de capteur utilisé. La position du capteur 12 est avantageusement réglée de sorte que cette distance d soit inférieure à 10 mm et, préférentiellement, égale à environ 1 mm.

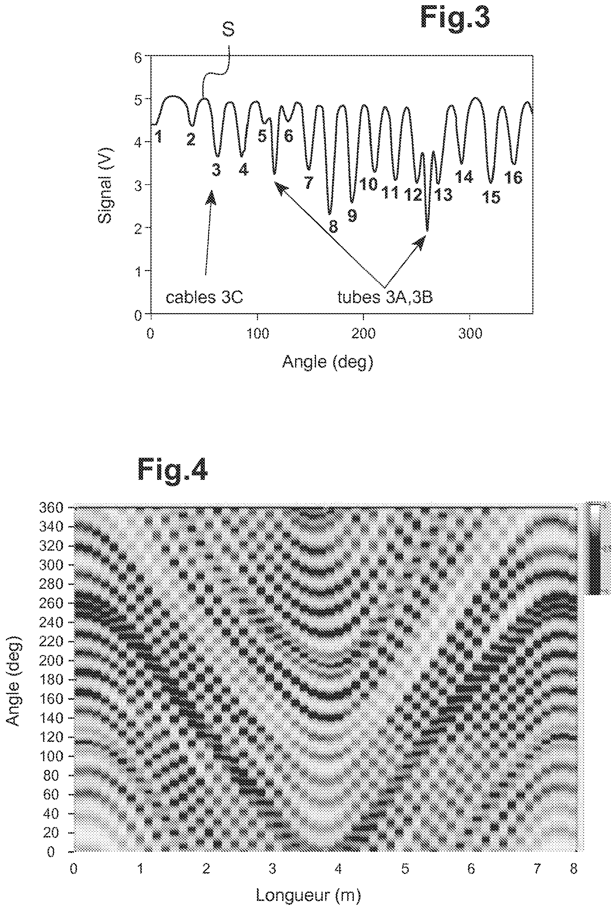

La figure 3 illustre alors le signal de mesure S acquis par le capteur 12, traduit sous la forme d'un signal électrique, pour une rotation complète du capteur autour de la structure en S-Z illustrée à la figure 2. Le signal de mesure comprend une pluralité de pics de détection correspondant chacun respectivement à la détection d'un élément périphérique de la structure en S-Z, au cours du balayage à 360° de la structure par le capteur. Les pics de détection sur la figure 3 sont numérotés en correspondance avec les numéros attribués aux câbles électriques 3C de la structure en S-Z illustrée à la figure 2. Le pic présent dans le signal entre les pics de détection 5 et 6 et entre les pics de détection 12 et 13 est alors représentatif de la détection respectivement des tubes 3A et 3B utilisés pour la mise en place d'une fibre optique.

Les signaux de mesure ainsi acquis par le capteur inductif 12 pendant la pose de la structure d'éléments périphériques en S-Z, sont transmis via l'interface de communication sans fil 15 de l'unité d'acquisition 13 embarquée sur la rubaneuse (9 ;10) vers l'unité de traitement 16 déportée, qui consiste en une baie de contrôle, comportant de préférence un pupitre de contrôle 17 équipé d'un clavier de saisie et/ou de programmation, d'un afficheur et de moyens de signalisation et d'alarme (lumineux et/ou sonore). La baie de contrôle 16 comprend en outre une mémoire 18 pour enregistrer l'amplitude des signaux de mesure acquis à chaque tour du capteur 12.

La baie de contrôle 16 est également reliée à des capteurs de type codeurs angulaire et linéaire, installés au niveau de la rubaneuse (9 ;10), permettant de connaître à tout moment respectivement la position angulaire du capteur inductif 12 liée au mouvement de rotation de celui-ci et la longueur du déplacement longitudinal du noyau central flexible 12 lié au mouvement d'avance de celui-ci, lors de la pose de la structure en S-Z. Ces données de positions angulaires et linéaires reçues par la baie de contrôle 16 sont stockées dans la mémoire 18 de la baie de contrôle, avec les signaux de mesure reçus du capteur inductif 12,

La baie de contrôle 16 comprend en outre des moyens de traitement de données 19, conçus pour synchroniser les données de positions linéaires et angulaires reçues avec les signaux de mesure acquis par le capteur inductif 12 et pour les traiter afin de construire la cartographie 2D de la structure en S-Z, telle qu'illustrée à la figure 4, décrivant la position angulaire de détection des éléments périphériques de la structure en S-Z autour du noyau central 1, en fonction de la longueur du déplacement longitudinal du noyau central 1 (les pixels en grisé correspondent à la détection des éléments périphériques métalliques de la structure et les pixels blancs, à la détection des parties non métalliques). Les moyens de traitement de données 19 sont en outre conçus pour suivre en particulier l'un des signaux présents dans la représentation de la cartographie 2D pendant le processus d'assemblage des éléments périphériques, afin d'établir une représentation du profil de pose (courbe S-Z) de l'élément concerné et, partant d'avoir accès à différents paramètres de contrôle de l'enroulement à partir de ce profil de pose ainsi établi. Par exemple, les moyens de traitement 19 permettent de repérer dans la cartographie 2D, le signal caractéristique provenant du tube 3A ou 3B utilisé pour la mise en place d'une fibre optique, grâce au pic caractéristique présent dans le signal de mesure du capteur entre les pics de détection 5 et 6 ou entre les pics de détection 12 et 13, comme illustré figure 3.

Les moyens de traitement 19 permettent donc de déterminer, à partir des signaux de mesure du capteur inductif 12, en combinant les données des positions angulaires et linéaires enregistrées, la position angulaire à laquelle l'élément périphérique qu'on a choisi de contrôler se trouvait, en fonction de la mesure de longueur du déplacement longitudinal du noyau central et ainsi, de proche en proche, de reconstruire le profil de pose pour cet élément lors de l'assemblage S-Z. Le profil de pose ainsi établi pour cet élément pourra avantageusement être affiché au niveau de l'afficheur du pupitre de contrôle 17 de la baie de contrôle, pendant le processus d'assemblage.

A partir du profil de pose ainsi établi, il est alors aisé d'avoir accès en particulier, au pas, à l'angle de recouvrement et à l'angle d'hélice de l'enroulement suivant la configuration en S-Z, fournissant autant de paramètres de contrôle de l'enroulement. Aussi, les moyens de traitement 19 sont conçus pour calculer, à partir du profil de pose établi pour l'élément contrôlé, au moins un ou préférentiellement l'ensemble de ces paramètres de contrôle, par un traitement logiciel approprié de la courbe affichée représentative du profil de pose. Pour rappel, le pas correspond à la distance entre deux points d'inversion de même sens du profil de pose, l'angle de recouvrement à l'angle de rotation décrit par l'élément contrôlé entre deux inversions successives et l'angle d'hélice à l'angle que fait l'élément contrôlé avec la droite génératrice de la conduite, pris à mi-hauteur du pas d'hélice.

Des plages de tolérance de fabrication définies par des seuils de tolérance haut et bas sont fixées par exemple par un opérateur pour chacun des paramètres de contrôle ci-dessus, préalablement à l'exécution du processus d'assemblage. Ainsi, les moyens de traitement 19 sont en outre conçus pour suivre l'évolution de ces paramètres de contrôle sur toute la durée du processus d'assemblage, en les comparant aux seuils de tolérance prédéterminés. Les paramètres de contrôle de l'enroulement calculés par les moyens de traitement 19 sont préférentiellement rafraîchis à chaque tour de rubaneuse (9 ;10), soit à chaque tour du capteur 12 autour de la structure en S-Z. On a ainsi accès en temps réel aux informations concernant le bon positionnement des éléments périphériques et partant, la tenue en production de la ligne IPB soumise à des efforts de traction/compression.

Si au moins un paramètre de contrôle est détecté en défaut, c'est-à-dire que sa valeur calculée sort de la plage de tolérance préalablement fixée, les moyens de traitement 19 de la baie de contrôle 16 sont conçus pour déclencher une alarme, qui peut être visuelle et/ou sonore, ainsi que pour signaler le ou les paramètres de contrôle en défaut, en signalant préférentiellement la mesure de longueur correspondante où le ou les paramètres ont été détectés en défaut. Ce signalement peut par exemple être effectuée au moyen d'une fenêtre d'alarme affichée sur l'afficheur du pupitre de contrôle 17.

La mise en oeuvre du procédé de l'invention a été décrite avec l'agencement d'un seul capteur inductif 12 monté en rotation autour de la structure en S-Z de la conduite. En effet, étant donné que la zone dans laquelle se situe le point d'inversion de l'enroulement en S-Z d'un élément contrôlé est comprise dans un intervalle d'au moins 130 mm et, comme décrit ci-avant, qu'à chaque tour de rubaneuse, la conduite avance de 130 mm, la présence d'un seul capteur inductif va ainsi permettre de retracer le profil de pose d'un élément contrôlé point par point avec une assez bonne résolution et, en particulier, avec la certitude de détecter la zone critique où se situe le point d'inversion. Toutefois, on peut encore améliorer la résolution de la détection en augmentant la vitesse de rotation du capteur (ce qui revient à réduire l'avance du noyau central flexible à chaque tour de rubaneuse) ou encore en augmentant le nombre de capteurs inductifs. Aussi, selon une variante de mise en oeuvre du procédé, on utilise une pluralité de capteurs inductifs montés en rotation autour de la structure en S-Z de la conduite. Dans ce cas, les capteurs inductifs peuvent être disposés circonférentiellement ou longitudinalement à la structure contrôlée.

La présente invention a plus particulièrement été décrite en relation avec la fabrication d'une conduite de type IPB, mais elle peut tout aussi bien s'adresser à la fabrication d'autres types de conduites, telles que les lignes d'ombilicaux de type ISU (pour « Integrated Service Umbilical ») et GLU (pour « Gas Lift Umbilical »), pour répondre à la problématique du contrôle du bon positionnement d'éléments périphériques métalliques posés suivant une configuration en S-Z lors de la fabrication de ces conduites.

## Revendications

1. Procédé de fabrication d'une conduite tubulaire notamment destinée au transport d'hydrocarbures provenant de puits sous-marin, comprenant une étape d'assemblage d'une structure d'éléments périphériques métalliques, dans laquelle lesdits éléments périphériques (3A, 3B, 3C) sont enroulés suivant une configuration en S-Z autour d'un noyau central flexible (1) entraîné en déplacement selon son axe longitudinal, **caractérisé en ce qu'**il comprend des étapes dans lesquelles :
- on fournit au moins un capteur inductif (12) agencé en rotation autour dudit noyau central flexible (1) de façon synchronisée avec le déplacement longitudinal dudit noyau central flexible (1), de manière que ledit au moins un capteur (12) balaye la périphérie dudit noyau central flexible en regard et à proximité immédiate desdits éléments périphériques (3A, 3B, 3C) enroulés autour dudit noyau central flexible (1), lors de l'étape d'assemblage ;
- on acquiert à l'aide dudit au moins un capteur (12), des signaux de mesure (S) dont l'amplitude varie selon que ledit au moins un capteur (12) se trouve ou non en regard d'un élément périphérique enroulé autour dudit noyau au cours de la rotation dudit au moins un capteur (12) autour dudit noyau central flexible (1) ;
- on contrôle le positionnement desdits éléments périphériques (3A, 3B, 3C) assemblés à partir desdits signaux de mesure acquis.

2. Procédé selon la revendication 1, **caractérisé en ce que** ladite étape d'assemblage est suivie d'une étape de pose d'une bande adhésive de maintien autour desdits éléments périphériques (3A, 3B, 3C) assemblés autour dudit noyau central flexible (1), ladite étape de pose de ladite bande adhésive étant effectuée à l'aide d'une rubaneuse (9 ;10) sur laquelle ledit au moins un capteur (12) est embarqué.

3. Procédé selon l'une quelconque des revendications 1 ou 2, **caractérisé en ce qu'**on acquiert des données de positions angulaires représentatives du mouvement de rotation dudit au moins un capteur inductif (12) autour dudit noyau central flexible et des données de positions linéaires représentatives du déplacement longitudinal dudit noyau central flexible (1) lors de l'étape d'assemblage, et en **en ce qu'**on traite lesdits signaux de mesure acquis, en combinant lesdites données de positions angulaires avec lesdites données de positions linéaires acquises, de manière à établir une représentation des profils de pose respectifs desdits éléments périphériques le long dudit noyau central flexible (1), lesdits profils de pose étant utilisés pour contrôler le positionnement desdits éléments périphériques assemblés.

4. Procédé selon la revendication 3, **caractérisé en ce qu'**on détermine des paramètres de contrôle de l'enroulement suivant la configuration S-Z pour un élément périphérique contrôlé à partir du profil de pose établi pour ledit élément périphérique contrôlé et **en ce qu'**on surveille l'évolution desdits paramètres de contrôle au cours de ladite étape d'assemblage en comparant lesdits paramètres de contrôle à des seuils de tolérance respectifs prédéterminés.

5. Procédé selon la revendication 4, **caractérisé en ce que** lesdits paramètres de contrôle comprennent le pas et/ou l'angle de recouvrement et/ou l'angle d'hélice de l'enroulement suivant la configuration S-Z pour ledit élément périphérique contrôlé.

6. Procédé selon l'une quelconque des revendications 4 ou 5, **caractérisé en ce qu'**il comprend une étape de déclenchement d'une alarme visuelle et/ou sonore lorsque l'un au moins desdits paramètres de contrôle est en défaut par rapport auxdits seuils de tolérance prédéterminés et une étape de signalisation dudit au moins un paramètre de contrôle en défaut.

7. Procédé selon l'une quelconque des revendications 4 à 6, **caractérisé en ce qu'**on rafraîchit lesdits paramètres de contrôle à chaque tour dudit au moins un capteur inductif (12) autour dudit noyau central flexible (1).

8. Procédé selon l'une quelconque des revendications précédentes, dans lequel on fournit une pluralité de capteurs inductifs disposés circonférentiellement audit noyau central flexible (1).

9. Procédé selon l'une quelconque des revendications 1 à 7, dans lequel on fournit une pluralité de capteurs inductifs disposés longitudinalement audit noyau central flexible (1).

10. Dispositif pour la mise en oeuvre du procédé selon l'une quelconque des revendications précédentes, comprenant des moyens de déplacement (6) d'un noyau central flexible (1) selon son axe longitudinal depuis une bobine émettrice (2) vers un poste d'assemblage (5), des moyens d'enroulement (8) d'éléments périphériques (3A, 3B, 3C) métalliques suivant une configuration en S-Z autour dudit noyau central flexible (1) au niveau dudit poste d'assemblage (5), ledit dispositif étant **caractérisé en ce qu'**il comprend une unité d'acquisition (13) comprenant au moins un capteur inductif (12) apte à être entraîné en rotation autour dudit noyau central flexible (1) de façon synchronisée avec le déplacement longitudinal dudit noyau central flexible (1), de manière que ledit au moins un capteur (12) balaye la périphérie dudit noyau central flexible (1) en regard et à proximité immédiate desdits éléments périphériques (3A, 3B, 3C) assemblés avec ledit noyau central flexible (1), et une unité de traitement (16) couplée à ladite unité d'acquisition (13), comprenant des moyens de traitement (19) adaptés pour contrôler le positionnement desdits éléments périphériques (3A, 3B, 3C) assemblés autour dudit noyau central flexible (1) à partir de signaux de mesure acquis par ledit au moins un capteur inductif (12).

11. Dispositif selon la revendication 10, **caractérisé en ce que** ledit au moins un capteur inductif (12) est monté à l'extrémité d'un bras support articulé fixé au niveau d'un plateau support d'une rubaneuse (9 ;10) disposée après ledit poste d'assemblage (5), ledit plateau support étant apte à être entraîné en rotation autour de la périphérie dudit noyau central flexible (1) assemblé avec lesdits éléments périphériques, pour la pose d'un ruban adhésif de maintien autour desdits éléments périphériques (3A, 3B, 3C).

12. Dispositif selon l'une quelconque des revendications 10 ou 11, **caractérisé en ce que** ledit au moins un capteur (12) est connecté à des moyens de conditionnement (14) des signaux de mesure dont la sortie est connectée à une interface de communication sans fil (15) permettant un transfert de données sans fil entre ladite unité d'acquisition (13) et ladite unité de traitement (16).

13. Dispositif selon l'une quelconque des revendications 10 à 12, **caractérisé en ce que** ladite unité de traitement (16) comprend une baie de contrôle comportant un pupitre de contrôle (17) équipé d'un clavier de saisie et/ou de programmation, d'un afficheur et de moyens de signalisation et d'alarme.

## Patentansprüche

1. Verfahren zur Herstellung einer Rohrleitung, die insbesondere für den Transport von von einem Unterwasser-Bohrloch stammenden Kohlenwasserstoffen bestimmt ist, das einen Schritt des Zusammenbaus einer Struktur von metallischen Umfangselementen enthält, wobei die Umfangselemente (3A, 3B, 3C) gemäß einer S-Z-Konfiguration um einen biegsamen zentralen Kern (1) gewickelt werden, der gemäß seiner Längsachse verschoben wird, **dadurch gekennzeichnet, dass** es Schritte enthält, in denen:
- mindestens ein induktiver Sensor (12) bereitgestellt wird, der in Drehung um den biegsamen zentralen Kern (1) synchron mit der Längsverschiebung des biegsamen zentralen Kerns (1) angeordnet ist, so dass der mindestens eine Sensor (12) den Umfang des biegsamen zentralen Kerns gegenüber den und in direkter Nähe der Umfangselemente (3A, 3B, 3C) abtastet, die um den biegsamen zentralen Kern (1) gewickelt werden, im Zusammenbauschritt;
- mit Hilfe des mindestens einen Sensors (12) Messsignale (S) erfasst werden, deren Amplitude je nachdem variiert, ob der mindestens eine Sensor (12) sich während der Drehung des mindestens einen Sensors (12) um den biegsamen zentralen Kern (1) gegenüber einem um den Kern gewickelten Umfangselement befindet oder nicht;
- die Positionierung der zusammengebauten Umfangselemente (3A, 3B, 3C) ausgehend von den erfassten Messsignalen kontrolliert wird.

2. Verfahren nach Anspruch 1, **dadurch gekennzeichnet, dass** auf den Zusammenbauschritt ein Schritt des Verlegens eines Halte-Klebebands um die um den biegsamen zentralen Kern (1) zusammengebauten Umfangselemente (3A, 3B, 3C) folgt, wobei der Verlegeschritt des Klebebands mit Hilfe einer Umwicklungsmaschine (9; 10) erfolgt, auf der der mindestens eine Sensor (12) angebracht ist.

3. Verfahren nach einem der Ansprüche 1 oder 2, **dadurch gekennzeichnet, dass** für die Drehbewegung des mindestens einen induktiven Sensors (12) um den biegsamen zentralen Kern repräsentative Winkelpositionsdaten und für die Längsverschiebung des biegsamen zentralen Kerns (1) im Zusammenbauschritt repräsentative Linearpositionsdaten erfasst werden, und dass die erfassten Messdaten verarbeitet werden, indem die erfassten Winkelpositionsdaten mit den Linearpositionsdaten kombiniert werden, um eine Darstellung der jeweiligen Verlegeprofile der Umfangselemente entlang des biegsamen zentralen Kerns (1) zu erstellen, wobei die Verlegeprofile verwendet werden, um die Positionierung der zusammengebauten Umfangselemente zu kontrollieren.

4. Verfahren nach Anspruch 3, **dadurch gekennzeichnet, dass** Kontrollparameter der Wicklung gemäß der S-Z-Konfiguration für ein kontrolliertes Umfangselement ausgehend vom für das Umfangselement erstellten Verlegeprofil bestimmt werden, und dass die Entwicklung der Kontrollparameter während des Zusammenbauschritts überwacht wird, indem die Kontrollparameter mit vorbestimmten jeweiligen Toleranzschwellen verglichen werden.

5. Verfahren nach Anspruch 4, **dadurch gekennzeichnet, dass** die Kontrollparameter den Überlappungsgang und/oder -winkel und/oder den Schrägungswinkel der Wicklung gemäß der S-Z-Konfiguration für das kontrollierte Umfangselement enthalten.

6. Verfahren nach einem der Ansprüche 4 oder 5, **dadurch gekennzeichnet, dass** es einen Schritt des Auslösens eines optischen und/oder akustischen Alarms, wenn mindestens einer der Kontrollparameter bezüglich der vorbestimmten Toleranzschwellen fehlerhaft ist, und einen Schritt der Signalisierung des mindestens einen fehlerhaften Kontrollparameters enthält.

7. Verfahren nach einem der Ansprüche 4 bis 6, **dadurch gekennzeichnet, dass** die Kontrollparameter bei jeder Umdrehung des mindestens einen induktiven Sensors (12) um den biegsamen zentralen Kern (1) aufgefrischt werden.

8. Verfahren nach einem der vorhergehenden Ansprüche, wobei eine Vielzahl von induktiven Sensoren bereitgestellt wird, die in Umfangsrichtung zum biegsamen zentralen Kern (1) angeordnet sind.

9. Verfahren nach einem der Ansprüche 1 bis 7, wobei eine Vielzahl von induktiven Sensoren bereitgestellt wird, die in Längsrichtung zum biegsamen zentralen Kern (1) angeordnet sind.

10. Vorrichtung zur Durchführung des Verfahrens nach einem der vorhergehenden Ansprüche, die Verschiebeeinrichtungen (6) eines biegsamen zentralen Kerns (1) gemäß seiner Längsachse ausgehend von einer Abwickelspule (2) zu einer Zusammenbaustation (5), Wickeleinrichtungen (8) von metallischen Umfangselementen (3A, 3B, 3C) gemäß einer S-Z-Konfiguration um den biegsamen zentralen Kern (1) im Bereich der Zusammenbaustation (5) enthält, wobei die Vorrichtung **dadurch gekennzeichnet ist, dass** sie eine Erfassungseinheit (13), die mindestens einen induktiven Sensor (12) enthält, der fähig ist, um den biegsamen zentralen Kern (1) synchron mit der Längsverschiebung des biegsamen zentralen Kerns (1) in Drehung versetzt zu werden, so dass der mindestens eine Sensor (12) den Umfang des biegsamen zentralen Kerns (1) gegenüber den und in direkter Nähe der mit dem biegsamen zentralen Kern (1) zusammengebauten Umfangselemente (3A, 3B, 3C) abtastet, und eine mit der Erfassungseinheit (13) gekoppelte Verarbeitungseinheit (16) enthält, die Verarbeitungseinrichtungen (19) enthält, welche geeignet sind, die Positionierung der um den biegsamen zentralen Kern (1) zusammengebauten Umfangselemente (3A, 3B, 3C) ausgehend von Messsignalen zu kontrollieren, die vom mindestens einen induktiven Sensor (12) erfasst werden.

11. Vorrichtung nach Anspruch 10, **dadurch gekennzeichnet, dass** der mindestens eine induktive Sensor (12) am Ende eines gelenkigen Trägerarms montiert ist, der im Bereich einer Trägerplatte einer Umwicklungsmaschine (9; 10) befestigt ist, die nach der Zusammenbaustation (5) angeordnet ist, wobei die Platte fähig ist, um den Umfang des mit den Umfangselementen zusammengebauten biegsamen zentralen Kerns (1) zum Verlegen eines Halte-Klebebands um die Umfangselemente (3A, 3B, 3C) in Drehung versetzt zu werden.

12. Vorrichtung nach einem der Ansprüche 10 oder 11, **dadurch gekennzeichnet, dass** der mindestens eine Sensor (12) mit Aufbereitungseinrichtungen (14) der Messsignale verbunden ist, deren Ausgang mit einer drahtlosen Kommunikationsschnittstelle (15) verbunden ist, die einen drahtlosen Datentransfer zwischen der Erfassungseinheit (13) und der Verarbeitungseinheit (16) erlaubt.

13. Vorrichtung nach einem der Ansprüche 10 bis 12, **dadurch gekennzeichnet, dass** die Verarbeitungseinheit (16) ein Kontrollgestell enthält, das ein Kontrollpult (17) aufweist, welches mit einer Eingabe- und/oder Programmiertastatur, einem Anzeigegerät und Signalisierungs- und Alarmeinrichtungen ausgestattet ist.

## Claims

1. A method for producing a tubular pipe notably intended for the transport of hydrocarbons coming from an underwater well, including a step of assembling a structure of metal peripheral elements, wherein said peripheral elements (3A, 3B, 3C) are wound in an S-Z configuration about a central flexible core (1) that is driven in movement along its longitudinal axis, **characterized in that** it includes the following steps:
- providing at least one inductive sensor (12) adapted to rotate about said central flexible core (1) in a manner synchronized with the longitudinal movement of said central flexible core (1), so that said at least one sensor (12) scans the periphery of said central flexible core opposite and in the immediate proximity of said peripheral elements (3A, 3B, 3C) wound around said central flexible core (1) during the assembly step;
- using said at least one sensor (12) to acquire measurement signals (S) the amplitude of which varies according to whether or not said at least one sensor (12) is located opposite a peripheral element wound around said core during the rotation of said at least one sensor (12) around said central flexible core (1);
- using said acquired measurement signals to control the positioning of said assembled peripheral elements (3A, 3B, 3C).

2. The method as claimed in claim 1, **characterized in that** said assembly step is followed by a step of applying a retaining adhesive tape around said peripheral elements (3A, 3B, 3C) assembled around said central flexible core (1), said step of applying said adhesive tape employing a tape-winding device (9;10) on which said at least one sensor (12) is mounted.

3. The method as claimed in either one of claims 1 or 2, **characterized in that** angular position data is acquired representative of the rotation movement of said at least one inductive sensor (12) around said central flexible core and linear position data is acquired representative of the longitudinal movement of said central flexible core (1) during the assembly step and **in that** said acquired measurement signals are processed by combining said acquired angular position data with said acquired linear position data to establish a representation of the respective application profiles of said peripheral elements along said central flexible core (1), said application profiles being used to control the positioning of said assembled peripheral elements.

4. The method as claimed in claim 3, **characterized in that** parameters for controlling the winding in the S-Z configuration are determined for a controlled peripheral element on the basis of the application profile established for said controlled peripheral element and **in that** the evolution of said control parameters is monitored during said assembly step by comparing said control parameters to respective predetermined tolerance thresholds.

5. The method as claimed in claim 4, **characterized in that** said control parameters include the pitch and/or the overlap angle and/or the helix angle of the winding in the S-Z configuration for said controlled peripheral element.

6. The method as claimed in either one of claims 4 or 5, **characterized in that** it includes a step of triggering a visual and/or audible alarm if at least one of said control parameters is defective with respect to said predetermined tolerance thresholds and a step of signaling said at least one defective control parameter.

7. The method as claimed in any one of claims 4 to 6, **characterized in that** said control parameters are refreshed on each rotation of said at least one inductive sensor (12) around said central flexible core (1).

8. The method as claimed in any one of the preceding claims, wherein multiple inductive sensors are disposed circumferentially with respect to said central flexible core (1).

9. The method as claimed in any one of claims 1 to 7, wherein multiple inductive sensors are disposed longitudinally with respect to said central flexible core (1).

10. A device for implementing the method as claimed in any one of the preceding claims, including means (6) for moving a central flexible core (1) along its longitudinal axis from a pay-out spool (2) toward an assembly station (5), means (8) for winding metal peripheral elements (3A, 3B, 3C) in an S-Z configuration about said central flexible core (1) at said assembly station (5), said device being **characterized in that** it includes an acquisition unit (13) including at least one inductive sensor (12) adapted to be driven in rotation about said central flexible core (1) in a manner synchronized with the longitudinal movement of said central flexible core (1) so that said at least one sensor (12) scans the periphery of said central flexible core (1) opposite and in the immediate proximity of said peripheral elements (3A, 3B, 3C) assembled with said central flexible core (1), and a processing unit (16) coupled to said acquisition unit (13) including processing means (19) adapted to control the positioning of said peripheral elements (3A, 3B, 3C) assembled around said central flexible core (1) on the basis of measurement signals acquired by said at least one inductive sensor (12).

11. The device as claimed in claim 10, **characterized in that** said at least one inductive sensor (12) is mounted at the end of an articulated support arm fixed to a plate supporting a tape-winding device (9;10) disposed after said assembly station (5), said support plate being adapted to be driven in rotation about the periphery of said central flexible core (1) assembled with said peripheral elements to apply a retaining adhesive tape around said peripheral elements (3A, 3B, 3C).

12. The device as claimed in either one of claims 10 or 11, **characterized in that** said at least one sensor (12) is connected to means (14) for conditioning the measurement signals the output of which is connected to a wireless communication interface (15) enabling wireless data transfer between said acquisition unit (13) and said processing unit (16).

13. The device as claimed in any one of claims 10 to 12, **characterized in that** said processing unit (16) includes a control unit including a control console (17) equipped with an input and/or programming keyboard, a display and signaling and alarm means.
